# EUROPEAN PATENT APPLICATION

(11) **EP 3 557 530 A1**
(43) Date of publication of application: **23.10.2019**
(21) Application number: 19165525.7
(22) Date of filing: 27.03.2019
(51) Int. Cl.: G06T 7/80

(54) **CALIBRATION SYSTEM AND METHOD**

(30) Priority: 16.04.2018 GB 201806172
(71) Applicant: Sony Interactive Entertainment Inc., Tokyo 108-0075 (JP)
(72) Inventor: FORSTER, Richard James, London, W1F 7LP (GB)
(74) Representative: D Young & Co LLP

(57) **Abstract**

A calibration system comprises input means operable to receive a set of images, each having a calibration pattern occupying a region of a captured scene, an image processor operable to calculate a combined image region corresponding to the combined regions of calibration patterns captured within the set of images, and an output processor operable to generate an output indicative of a desired region of a scene within which to capture the calibration pattern within a subsequent image.

## Description

The present invention relates to a calibration system and method.

Cameras capture light from a real-world scene as a two-dimensional image, by a process of measuring light that originates from the real world and, via one or more light guides (lenses, mirrors, pinholes etc.), impinges upon pixels of a sensor.

It is known to model how incoming light is associated with each pixel in the resulting image using a projection matrix or camera matrix (See for example https://en.wikipedia.org/wiki/Camera_resectioning). This matrix is computed in dependence upon a set of intrinsic parameters.

The intrinsic parameters typically include focal length, image sensor format, principal point, and lens distortion, and sometimes a general nonlinear adjustment parameter referred to as a 'bundle adjustment' .

It is desirable to generate a good estimate of these intrinsic parameters in order to generate a good model of the camera.

The present invention aims to address or mitigate this problem.

In a first aspect, a calibration system is provided in accordance with claim 1.

In another aspect, a calibration method is provided in accordance with claim 9.

Further respective aspects and features of the invention are defined in the appended claims.

Embodiments of the present invention will now be described by way of example with reference to the accompanying drawings, in which:
Figure 1 is a schematic diagram of a camera and two exemplary calibration patterns in accordance with embodiments of the present invention.
Figure 2 is a flow diagram of a method of calibration in accordance with embodiments of the present invention.

A calibration system and method are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

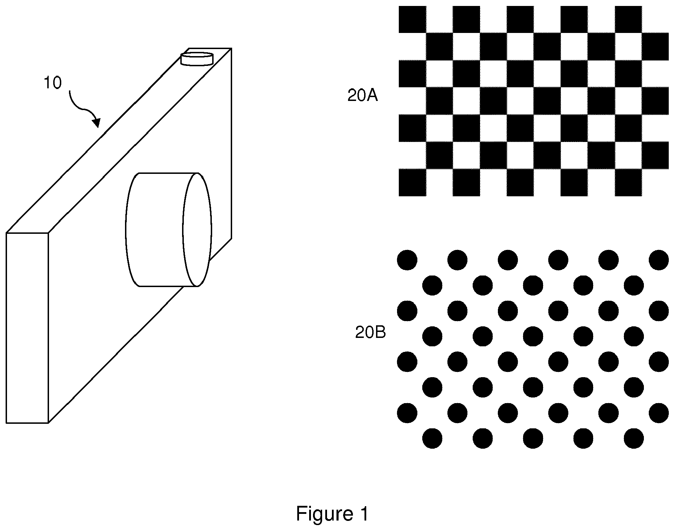

Referring to Figure 1, calibration for a still or video camera 10 may be achieved by analysis of captured images of a calibration pattern such as a chequerboard 20A, or regular pattern of dots 20B, although in principle any predetermined pattern, including a random black and right or greyscale pattern, or one or more fiduciary markers, may be used. The correlation pattern may be a physically printed pattern, or displayed upon a screen.

However, it will be appreciated that in order to properly model the intrinsic parameters, and in particular the lens distortion and any other nonlinear adjustment parameters, it is desirable to capture images of the calibration pattern for as many of the sensor pixels as possible, and hence as much of the optical path of light through the or each light guide to the image capture apparatus (the sensor), in order to characterise as much of the or each light guide is possible.

Simply placing the calibration pattern close to the camera so that it encompasses the complete field of view is not necessarily a solution, since this close to the camera the black regions and white regions of the pattern do not provide sufficient discriminatory information (i.e. usable features of the calibration pattern are too sparse / widely spaced to properly characterised the camera).

Instead, it is preferable to capture a set of images in which the calibration pattern is found at different positions, typically laterally but optionally also as a function of distance, and optionally also at different orientations within the captured scene. Together such a set of images provides the combination of fine pattern detail and broad coverage over the sensor that can result in a good calculation of the intrinsic parameters. The algorithms used to calculate the intrinsic parameters typically identify sets of features within a known calibration pattern. Since these have a predefined spatial relationship, the relative orientation and position of these features within a captured image can be calculated, and furthermore any variability in the predefined spatial relationship due to the camera itself can be detected. Consequently with enough images providing enough features across the camera's field of view, it becomes possible to calculate a good estimate of the intrinsic parameters. Several suitable algorithms are known, including those listed in the above noted Wikipedia article.

In an embodiment of the present invention, a calibration system is adapted to obtain a good set of images for calibration by evaluating the position, and optionally scale and/or orientation, of the calibration pattern within captured images (calibration poses), and where the set is not sufficiently good, indicate to the user of the camera what additional calibration poses should be captured.

In this way, the accuracy of the camera model obtained from calculation the intrinsic parameters can be improved.

Typically in this process the camera is fixed (for example on a tripod), and the calibration pattern is moved; however it will be appreciated that a fixed calibration pattern and a mobile camera can achieve the same relative changes in position (and indeed if the calibration pattern and camera are both mobile); It can be simpler to indicate to a user changes in placement of the calibration pattern with respect to the camera if the camera is fixed. Conversely it can be simpler to automate the collection of images if the camera is on a motorised mount.

Hence in an embodiment of the present invention, for a current set of captured images, the calibration system detects the calibration pattern within the captured images, and detects which parts of the camera sensor (corresponding to the captured images) has captured an image of the calibration pattern. In other words, the calibration system detects the extent of sensor coverage of the calibration pattern over the set of images, or similarly the sum area occupied by the calibration pattern over the set of images.

As noted previously herein, if the calibration pattern is too close to the camera, then for a given area of the image encompassing the calibration pattern, the known features of the pattern used by the algorithm may be sparsely distributed, subsequently providing a poor estimate of the camera model. Similarly, if the calibration pattern is too far from the camera, then for a given area of the image encompassing the calibration pattern, known features using the algorithm may be distorted or poorly represented, for example due to aliasing within the captured image, again resulting in a poor estimate of the camera model.

Hence optionally when detecting the extent of sensor coverage of the calibration pattern over the set of images, individual images in which the pattern is larger than a threshold size corresponding to a first close threshold distance from the camera, or smaller than a threshold size corresponding to a second far threshold distance from the camera, are discounted. In other words, optionally when detecting the sum area occupied by the calibration pattern over the set of images, this may only be based upon calibration patterns within the captured images that fit within a predetermined range of scales/sizes.

Once calculated, the calibration system can indicate to a user the area of the sensor already exposed to the calibration pattern, and/or the area of the sensor not already exposed to the calibration pattern (for example by shading a current view output by the camera either corresponding to previously exposed or non-exposed areas, as appropriate, for example by providing a semitransparent graphical overlay over the current view). Alternatively, the calibration system can move a motorised mount to point the camera so that the calibration pattern now occupies a totally or partially unexposed sensor area.

A related issue to aliasing and unwanted distortions of features is the orientation of the calibration pattern relative to the camera. It would be preferable for the calibration pattern to be parallel to the sensor plane of the camera, since all else being equal this minimises distortions in the calibration pattern within the captured image. Consequently if a particular image within the set of images is provided by a calibration pattern held at a nonparallel angle with respect to the sensor, or optionally a nonparallel angle greater than a threshold angle, then it is discounted from the set for the purposes of determining the coverage or sum area of the sensor exposed to the calibration pattern over the set of images. The relative angle of the calibration pattern in a captured image can be determined from a comparison with the known calibration pattern, using known techniques.

Alternatively, if providing feedback to the user, the corresponding region could be highlighted in a different colour, pattern and/or brightness to suggest that whilst coverage exists it is not ideal and would benefit from being repeated with the calibration pattern closer to parallel with the image sensor plane.

Hence more generally, if highlighting the current view output by the camera, the nature of the highlight at each point in the image may be responsive to the angle of the calibration pattern relative to the sensor plane at that position within the image set. Where captured images of the calibration pattern overlap, then the angle of the calibration pattern closest to parallel with the sensor plane from among the relevant images may be chosen.

It will be appreciated that if a specific algorithm is chosen for calculating the intrinsic parameters for the camera model that benefits from capturing calibration patterns that are nonparallel to the sensor plane, then the same principle can be used, but to indicate whether the calibration pattern is at a target orientation or above a threshold angular deviation from that orientation, or within a desired angular range, for example.

Given the above, the calibration system can track which parts of the camera sensor have been exposed to the calibration pattern in the captured set of images, and optionally whether these meet additional criteria relating to whether the calibration pattern was too near, too far, or at a relative orientation to the image sensor plane that is inside / outside a predetermined range.

The calibration system can then indicate to the user which parts of the camera sensor should preferably be exposed to the calibration pattern, and optionally which parts of the camera sensor should preferably be re-exposed to the calibration pattern, either by moving the calibration pattern further away, moving the calibration pattern closer, or changing the relative orientation of the calibration pattern in that region. Meanwhile if the camera is on a motorised mount, the camera can be repositioned to expose or re-expose parts of the camera sensor, again optionally with instructions to a user to change the distance and/or orientation of the calibration pattern

In such a manner, good coverage of calibration pattern across the camera sensor can be obtained.

Optionally, once a threshold proportion of the camera sensor has been exposed to the calibration pattern, the intrinsic parameters can be calculated.

It may then be possible to assess the quality of the intrinsic parameters, and use this to calculate whether further images of the colouration need to be captured.

Hence for example the user can capture more images for the set of images, for example by following indications from the calibration system is to what parts of the sensor still need exposure to the calibration pattern, or would benefit from a different exposure. Subsequently for each new image or optionally for every M new images (where M is a predetermined number, such as 2, 3, 4, 5, 6, 7, 8, 9, 10, 15, 20, 50, or 100) the intrinsic parameters can be re-calculated and the parameters can be compared with the previous calculation. Once the change in parameters falls below a predetermined threshold, the intrinsic parameters can be considered to be well characterised, and the user can be informed.

Alternatively or in addition, once a set of intrinsic parameters has been calculated, it is possible to calculate the difference between feature points of the calibration pattern in the input image and a projected version of the calibration points using the calculated intrinsic parameters. Once the difference is below a predetermined threshold value, then the region of the light guide/sensor encompassed by the input image feature points can be said to be properly characterised by the intrinsic parameters.

Further, it will be appreciated that this comparison can be performed for each of the images contributing to the coverage of the sensor by the calibration pattern, and the user can be informed if the comparison for a particular image of calibration pattern results in a difference greater than a predetermined threshold, suggesting that a new picture is required for that region of the sensor.

Hence referring again to providing a feedback to indicate where in an image the calibration pattern needs to be positioned for subsequent picture, in a similar manner to indicating that a calibration picture is outside a scale range or angle range, optionally the feedback can indicate if the camera model prediction deviates from a captured image of the calibration pattern in a particular area and/or that image can be discounted from the set contributing to the total coverage/sum of successfully imaged areas used to indicate which parts of the image area have been successfully exposed to the calibration pattern.

It will be appreciated that other potential sources of error within the image capturing process can be detected and either alerted to the user and/or used as the basis to discount an image from the set, including whether the calibration pattern is blurred within an image (for example due to unexpected relative motion), whether part of the pattern is obscured (for example due to a user's thumb over a lens, or due to glare), whether part of the pattern is corrupted (for example due to noise in low light levels), and the like.

It will be appreciated that the calibration system may be part of a still or video camera, or may be a separate device or part thereof. Hence for example the device may be a computer operating under suitable software instruction, which performs analysis according to the techniques disclosed herein based on photos received from the camera. The feedback, either to the user (or to a control unit of a motorised camera mount) may then be generated by the computer. In the case of feedback to the user, as noted previously an indication of which parts of a captured image (and hence which parts of the camera's image sensor) have been exposed to the calibration pattern, optionally subject to one or more exclusions based upon criteria such as those described previously herein (e.g. distance/size, relative angle, difference with respect to camera model, and other more conventional image capture artefacts), may be provided. Where this image can comprise a live image from the camera with additional feedback information superposed upon it, then this can further assist the user with placing the calibration pattern within the field of view of the camera in a manner that when photographed/captured successfully complements the existing image set. It will also be appreciated that a combination of automatic acquisition of images using the motorised camera mount and feed back to a user may be employed; for example a computer may attempt to capture different photographs of the calibration pattern in order to provide a threshold level of coverage across the image set (typically 100%, but optionally less, such as for example 99%, 95%, 90%, 80%, 75%, by way of non-limiting examples) - but where the calibration system is unable to capture an image for a particular region that meets any criteria currently being implemented to (for example because rotation of the camera mount places the calibration pattern at a relative angle to the sensor plane that is outside a defined tolerance, or because the calibration pattern is too close or too far away, or because of detected glare on the pattern that interferes with detection of one or more reference features), then it may alert a user to the nature of the problem, based upon which criteria are failed, so that the user can act to remedy the situation.

Hence in a summary embodiment of the present invention, a calibration system comprises an input means operable to receive a set of images, each having a calibration pattern within a region of a captured scene. Depending on the nature of the calibration system, the input means may be a memory unit of the camera, or may be a network port of a computer receiving images from the camera, or from intermediary storage (e.g. a server), or another data port, such as that for receiving a memory card. It will be appreciated that the term 'scene' merely refers to the environment in which the calibration pattern is located, and is non-limiting. It will also be appreciated that 'receiving a set of images' may occur in a unitary fashion (for example receiving a group of image files on a memory stick), or it may occur in a stepwise fashion to build up the set, with successive images being obtained, for example, once captured by a camera, or it may be a combination of these two approaches. It will be appreciated that the calibration system may be a discreet component such as a system-on-a-chip, or more broadly may be a camera within which the functionality of the calibration system is incorporated, or a computer within which the functionality of the calibration system is incorporated, or a combination of both camera and computer.

The calibration system also comprises an image processor operable to calculate a combined image region corresponding to the combined regions of calibration patterns captured within the set of images. The image processor may be a conventional CPU, GPU, other processor such as a dedicated processor, or FPGA (field programmable gate array), or any combination of the above, the image processor operates under suitable software instruction to perform the calculation. As described herein, the combined image region can be understood as the extent of coverage of the calibration pattern over the set of images, or similarly the sum area occupied by the calibration pattern over the set of images. To the extent that the image is representative of that part of the camera sensor used to generate the image, it will also be understood that the combined image region is also representative of the extent to which the camera sensor has been exposed to the calibration pattern by the capture of the set of images.

The calibration system also comprises an output processor operable to generate an output indicative of a desired region of a scene in which to capture the calibration pattern within a subsequent image. As noted previously herein, to assist a user the calibration system can provide an image overlay indicating the combined image region, and hence by omission indicating within which parts of the image to capture the calibration pattern in a subsequent image (i.e. the desired region). Put another way, the calibration system can leave clear those parts of the image within which it would be preferable to capture the calibration pattern using one or more subsequent images. Of course, the calibration system could alternatively or in addition output an image overlay comprising the complement of the combined image region and thus positively indicate the areas of the image within which would be preferable to capture the calibration pattern using one or more subsequent images. Alternatively or in addition, the output indicative of a region of a scene in which to capture the calibration pattern within the subsequent image may be a control signal for a motorised camera mount, to point the camera in a direction in which the calibration pattern then occupies at least part of the relevant image region for a subsequent image capture. It will be appreciated that the desired region may be a single contiguous region or may comprise two or more sub-regions.

In an instance of this summary embodiment, the calibration system comprises an image set selection processor (again operating under suitable software instruction) to exclude an image from the set of images, responsive to at least a first criterion dependent upon the calibration pattern captured within the excluded image. The exclusion may occur after the image has already been included within the set of images (for example a subsequent calculation shows that the image provides a poor match) or may occur before the image is added to the set of images. The at least first criterion is dependent upon the calibration pattern captured within the excluded image in the sense that a parameter, property, or calculated outcome based upon a parameter or property of the calibration parameter within the image is evaluated with respect to the at least first criterion.

In such an instance, as described previously a criterion is that the region of an image occupied by the calibration pattern exceeds a first predetermined size.

In such an instance, as described previously a criterion is that the region of an image occupied by the calibration pattern is less than a second predetermined size.

In such an instance, as described previously a criterion is that a calculated angle of the calibration pattern in an image is outside a predetermined range of angles (typically but not necessarily a range centred upon an angle parallel with the image sensor plane).

In such an instance, as described previously a criterion is that a calculated difference between feature points of the calibration pattern in the image and a projected version of the calibration points using a model of intrinsic parameters of the camera exceeds a predetermined threshold.

Hence, as described previously herein, the calibration system can exclude or discount images of the calibration pattern that are unlikely to improve the calculated estimate of the intrinsic parameters of the camera model, and hence also identify those region(s) of the image/sensor that have not yet been exposed to an adequate image of the calibration pattern.

In an instance of this summary embodiment, as described previously herein the output processor is operable to control a motorised mount that moves a camera into a position where a subsequent captured image of the calibration pattern will encompass at least part of the desired region.

In an instance of this summary embodiment, the calibration system comprises a camera. The corporation the camera allows ongoing review and update of the image set (as opposed, for example, to reviewing a candidate image set provided a laptop). The calibration system may be wholly contained within the camera, or may be wholly or partially contained on a computer operable to receive images from the camera. It will be appreciated that where a camera can provide a live view of images detected by a sensor, this can assist a user with positioning the camera and/or calibration pattern so that the calibration pattern occupies a previously unexposed region of the sensor in a subsequent image. Similarly where automatic movement of the camera on a motorised mount is controlled by the calibration system, a live view from the camera may still assist to confirm that the calibration pattern occupies an expected position within the live view, before a subsequent image is taken.

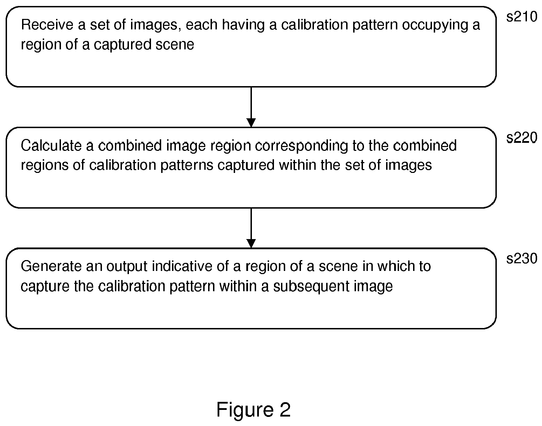

Referring now also to figure 2, in another summary embodiment of the present invention, a calibration method comprises:
In a first step s210, receiving a set of images, each having a calibration pattern occupying a region of a captured scene. As noted previously in relation to the preceding summary embodiment, images may be received as a complete set or maybe obtained over time as new images are captured, or potentially a combination of the two. Again as noted previously, the term 'scene' merely refers to the non-limiting environment in which the calibration pattern is found.
In a second step s220, calculating a combined image region corresponding to the combined regions of calibration patterns captured within the set of images. As described previously herein the combined image region (which may be a single contiguous region or a collection sub-regions, depending on the order and extent to which images of the calibration pattern have been taken) can be understood to correspond to the extent of coverage of the calibration pattern across the set of images, or similarly a sum area occupied by the calibration pattern over the set of images. Hence for each part of the combined image region it may also be thought of as the output of a logical OR function for the same part (e.g. pixel or macro block) in each of the set of images, depending on whether or not that part depicts an area of the calibration pattern.
Finally, a third step s230 of the method comprises generating an output indicative of a desired region of a scene in which to capture the calibration pattern within a subsequent image. As noted previously herein, this may take the form of a graphical overlay indicating the combined image region, and/or a complement of the combined image region, for example to be output on a display of the camera under test, or on a display of/associated with a computing device separate to such a camera. Alternatively or in addition it may take the form of control signals to a motorised camera mount, in order to reposition the camera so that the calibration pattern occupies a region within the next captured image that is at least partially outside the calculated combined image region, thereby improving overall coverage of the combine image region and by extension the image sensor.

As described previously herein, this serves to improve the quality/accuracy of the subsequently calculated intrinsic parameters used in a model of that camera.

It will be apparent to a person skilled in the art that variations in the above summary embodiment of a method, corresponding to operation of the various embodiments of the apparatus as described and claimed herein are considered within the scope of the present invention, including but not limited to:
- excluding an image from the set of images, responsive to at least a first criterion dependent upon the calibration pattern captured within the excluded image;
- the criterion being one or more selected from a list consisting of:
   ∘ that the region of an image occupied by the calibration pattern exceeds a first predetermined size;
   ∘ that the region of an image occupied by the calibration pattern is less than a second predetermined size;
   ∘ that a calculated angle of the calibration pattern in an image is outside a predetermined range of angles; and
   ∘ that a calculated difference between feature points of the calibration pattern in the image and a projected version of the calibration points using a model of intrinsic parameters of the camera exceeds a predetermined threshold;
- controlling a motorised mount the move the camera into a position where subsequent captured image of the calibration pattern will encompass these part of the desired region; and
- implementing any of the above techniques within a discreet component for use in a camera or computer, or within a camera, or within a computer, or a combination of camera and computer.

It will be appreciated therefore that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, PROM, RAM, flash memory or any combination of these or other storage media, or realised in hardware as an ASIC (application specific integrated circuit) or an FPGA or other configurable circuit suitable to use in adapting the conventional equivalent device. Separately, such a computer program may be transmitted via data signals on a network such as an Ethernet, a wireless network, the Internet, or any combination of these or other networks.

## Claims

1. A calibration system, comprising
input means operable to receive a set of images, each having a calibration pattern occupying a region of a captured scene;
an image processor operable to calculate a combined image region corresponding to the combined regions of calibration patterns captured within the set of images; and
an output processor operable to generate an output indicative of a desired region of a scene within which to capture the calibration pattern within a subsequent image.

2. A calibration system in accordance with claim 1, comprising
an image set selection processor operable to exclude an image from the set of images, responsive to at least a first criterion dependent upon the calibration pattern captured within the excluded image.

3. A calibration system in accordance with claim 2, in which a criterion is that the region of an image occupied by the calibration pattern exceeds a first predetermined size.

4. A calibration system in accordance with claim 2 or claim 3, in which a criterion is that the region of an image occupied by the calibration pattern is less than a second predetermined size.

5. A calibration system in accordance with any one of claims 2 to 4, in which a criterion is that a calculated angle of the calibration pattern in an image is outside a predetermined range of angles.

6. A calibration system in accordance with any one of claims 2 to 5, in which a criterion is that a calculated difference between feature points of the calibration pattern in the image and a projected version of the calibration points using a model of intrinsic parameters of the camera exceeds a predetermined threshold.

7. A calibration system in accordance with anyone of the preceding claims, in which the output processor is operable to control a motorised mount that moves a camera into a position where a subsequent captured image of the calibration pattern will encompass at least part of the desired region.

8. A calibration system in accordance with anyone of the preceding claims, comprising a camera.

9. A calibration method, comprising the steps of:
receiving a set of images, each having a calibration pattern occupying a region of a captured scene;
calculating a combined image region corresponding to the combined regions of calibration patterns captured within the set of images; and
generating an output indicative of a desired region of a scene in which to capture the calibration pattern within a subsequent image.

10. A calibration method according to claim 9, comprising the step of
excluding an image from the set of images, responsive to at least a first criterion dependent upon the calibration pattern captured within the excluded image.

11. A calibration method according to claim 10, in which a criterion is one or more selected from the list consisting of:
i. that the region of an image occupied by the calibration pattern exceeds a first predetermined size;
ii. that the region of an image occupied by the calibration pattern is less than a second predetermined size;
iii. that a calculated angle of the calibration pattern in an image is outside a predetermined range of angles; and
iv. that a calculated difference between feature points of the calibration pattern in the image and a projected version of the calibration points using a model of intrinsic parameters of the camera exceeds a predetermined threshold.

12. A computer readable medium having computer executable instructions adapted to cause a computer system to perform the method of any one of claims 9 to 11.
